# EUROPÄISCHE PATENTANMELDUNG

(11) **EP 3 725 757 A1**
(43) Veröffentlichungstag der Anmeldung: **21.10.2020**
(21) Anmeldenummer: 19020292.9
(22) Anmeldetag: 16.04.2019
(51) Int. Cl.: C05F 5/00, C10G 1/08

(54) **ANLAGE ZUR HERSTELLUNG VON JET FUEL, DIESEL UND DÜNGEMITTEL AUS KOHLENWASSERSTOFFHALTIGEN RESTSTOFFEN**

(71) Anmelder: Fehrenbach, Sebastian, 79793 Wutöschingen (DE)
(72) Erfinder: Fehrenbach, Sebastian, 79793 Wutöschingen (DE)
(74) Vertreter: Kayser, Christoph

(57) **Zusammenfassung**

Eine Anlage zur Herstellung von Düngemittel aus kohlenwasserstoffhaltigen Reststoffen, mit einer Mischeinrichtung zur Aufnahme und zum Mischen der kohlenwasserstoffhaltigen Reststoffe und eines Kreislaufkatalysatoröls, die stromabwärts mit einer Verdampfungseinrichtung verbunden ist, um ein aus der Mischeinrichtung abgeführtes Produktgemisch zu verdampfen und Jet-Fuel oder Dieselöl zu separieren, ist dadurch gekennzeichnet, dass an einen Ausgang am unteren Ende der Verdampfungseinrichtung eine Mahleinrichtung angeschlossen ist, in der ein am unteren Ende anfallender nicht verdampfbarer Rückstand aus den kohlenwasserstoffhaltigen Reststoffen und dem Kreislaufkatalysatoröl gemahlen wird, und an die Verdampfungseinrichtung ein Separationsbehälter angeschlossen ist, in dem das gemahlene Produkt in Katalysator und Düngemittel getrennt wird.

## Beschreibung

Die vorliegende Erfindung betrifft eine Anlage zur Herstellung von Düngemittel aus kohlenwasserstoffhaltigen Reststoffen, mit einer Mischeinrichtung zur Aufnahme und zum Mischen der kohlenwasserstoffhaltigen Reststoffe und eines Kreislaufkatalysatoröls, die stromabwärts mit einer Verdampfungseinrichtung verbunden ist, um ein aus der Mischeinrichtung abgeführtes Produktgemisch zu verdampfen und Jet-Fuel oder Dieselöl zu separieren sowie ein Verfahren dazu.

Die Erfindung beschreibt eine Anlage und ein Verfahren zur katalytischen Erzeugung von Düngemittel unter Gewinnung von Jet-Fuel und/oder Diesel und gereinigtes Wasser sowie einer Rückgewinnung von eingesetztem Katalysator. Weitere Produkte können dabei aus dem Recycling in Form von Ölen und Wachsen gewonnen werden.

Bekannt ist das System der katalytischen Erzeugung von Diesel als Hauptprodukt in Mischungsturbinen aus dem deutschen Patent DE 10 2005 056 736. In diesem Stand der Technik ist die Erzeugung von Diesel in Mischungsturbinen beschrieben, wobei das Produkt in Dampfform bei nahezu atmosphärischem Druck aus der Flüssigkeit verdampft und anschließend in Kondensatoren, zusammen mit dem entstehenden Wasserdampf kondensiert wird. Um den Diesel aus dem katalytischen Gemisch einigermaßen vollständig zu verdampfen, werden in den Mischungsturbinen Temperaturen bis 350°C erzeugt.

Dabei entsteht ein zunehmend als verbleibender Rückstand ein nicht verdampfbares, zähes Bitumen, welches im kalten Zustand auch nicht mehr pumpfähig, also liquide ist und somit einer sofortigen Verwendung oder Aufarbeitung bedarf. Die Verwendung als Bitumen oder die sofortige Aufarbeitung durch Verbrennung mit Wärmeerzeugung bringt erhebliche Risiken in den Anlagebetrieb. Wegen einer Verschmutzung droht der Ausfall des gesamten Anlagebetriebs. Ein kontinuierlicher, ungestörter Betrieb der Anlage über längere Zeiten ist mit dem derzeitigen Umgang mit dem nach der Verdampfung verbleibenden Rückstand kaum möglich.

Überraschenderweise hat sich nun gezeigt, dass ein kontinuierlicher, ungestörter Betrieb der Anlage möglich wird, wenn der Umgang mit dem verbleibenden Reststoff, also dem Bitumen, vollkommen anders erfolgt.

Die Aufgabe der vorliegenden Erfindung ist, eine Anlage der eingangs genannten Art für die Herstellung von Düngemittel zu optimieren.

Die Aufgabe wird dadurch gelöst, dass an einen Ausgang der Verdampfungseinrichtung eine Mahleinrichtung angeschlossen ist, in der ein am Ausgang anfallender nicht verdampfbarer Rückstand aus den kohlenwasserstoffhaltigen Reststoffen und dem Kreislaufkatalysatoröl gemahlen wird, und an die Verdampfungseinrichtung ein Separationsbehälter angeschlossen ist, in dem das gemahlene Produkt in Katalysator und Düngemittel getrennt wird.

Es hat sich im Rahmen der vorliegenden Erfindung nämlich gezeigt, dass sich ein in einer katalytischen Umwandlungsstufe gebildetes Bitumen-Katalysator-Gemisch in einer Mahleinrichtung fast vollständig bis zu einem trockenen Staub aufbereiten lässt.

Es gehört zu der überraschenden Erkenntnis, dass die mechanische Einwirkung der Mahleinrichtung auf das Gemisch eine chemische Reaktion des homogenen Katalysator-Bitumen-Gemisches aktiviert, sodass die Kohlenwasserstoffe das Gemisch fast vollständig in Dampfform verlassen und der verbleibende Rückstand zu einem festen und pulverförmigen Produkt wird.

Das ist ein großer und entscheidender Fortschritt für den Anlagenbetrieb und das Verfahren, da das Vorliegen eines pulverförmigen Produkts im Ablauf viel unproblematischer ist als ein klebriges Bitumen.

Dieses Pulver enthält fast ausschließlich nur den Katalysator aus dem Katalysatoröl und aus Säuren und einem ebenfalls zugegebenen Kalkstein gebildete Salze. Beim Zumischen des für eine katalytische Reaktion in der Mischeinrichtung eingegebenen Kalksteins bilden sich diese Salze, die eine Herstellung von Düngemittel ermöglichen.

Ein weiterer Vorteil der vorliegenden Erfindung ist, zwischen der Verdampfungseinrichtung und der Mahleinrichtung Zwischenbehälter angeordnet ist, in dem der nicht verdampfbare Rückstand kontinuierlich gesammelt wird.

Durch den Zwischenbehälter wird ermöglicht, den Prozess der Düngemittelherstellung zu optimieren und an den Betrieb der Anlage anzupassen. Es werden Rückstände gesammelt und erste bei genügender Menge an die Mahleinrichtung abgegeben.

Ein weiterer Vorteil der vorliegenden Erfindung ist, dass die Mahleinrichtung eine Druckkammer aufweist. Durch die Druckkammer wird es möglich, einen ein in der Anlage bei der Zersetzung der kohlenwasserstoffhaltigen Reststoffe anfallendes Gas (CO2) zu nutzen, um einen Partialdruck in der Mahleinrichtung einzustellen, der zu einer optimalen Verdampfungstemperatur auch in der Mahleinrichtung führt. So ist es möglich, die beim Mahlvorgang noch freigesetzten Kohlenwasserstoffe durch Verdampfung zu entziehen und dem Prozess der Gewinnung von Jet Fuel und/oder Diesel zuzuführen und gleichzeitig die Rückstände für die Herstellung von Düngemittel zu optimieren.

Ein weiterer Vorteil der vorliegenden Erfindung ist, dass der Separationsbehälter Wasser enthält, in dem der Katalysator ausfällt. Wird das in der Mahleinrichtung entstehende Pulver mit Wasser gemischt, trennt sich in der Suspension der Katalysator von dem Düngemittel dadurch, dass der Katalysator wasserunlöslich ist und sofort ausfällt. Er kann als Sedimentschlamm dem Prozess mit den Injektionsmischungsturbinen zugegeben werden, wodurch die Katalysatorkonzentration in dem Prozess erhalten bleibt.

Das führt nun zu einem vollkommen anderen Prozessablauf gegenüber dem bisher beschriebenen Prozess. Die Anlage hat somit 2 katalytische Prozesse, dem ersten Prozess mit der Injektionsvermischungsturbine, der das homogene Gemisch mit dem Katalysator herstellt und die Produkte Waser und Diesel abtrennt bei Temperaturen von ca. 250 - 300°C und dem 2. Prozess mit der katalytischen Intensivierung durch die mechanischen Einwirkungen der Hammermühle, der die restlichen Kohlenwasserstoffe aus dem Gemisch dampfförmig austreibt und das Gemisch zu einem trockenen Pulver umwandelt.

Weitere Vorteile ergeben sich aus den Merkmalen der weiteren Unter- und Nebenansprüche.

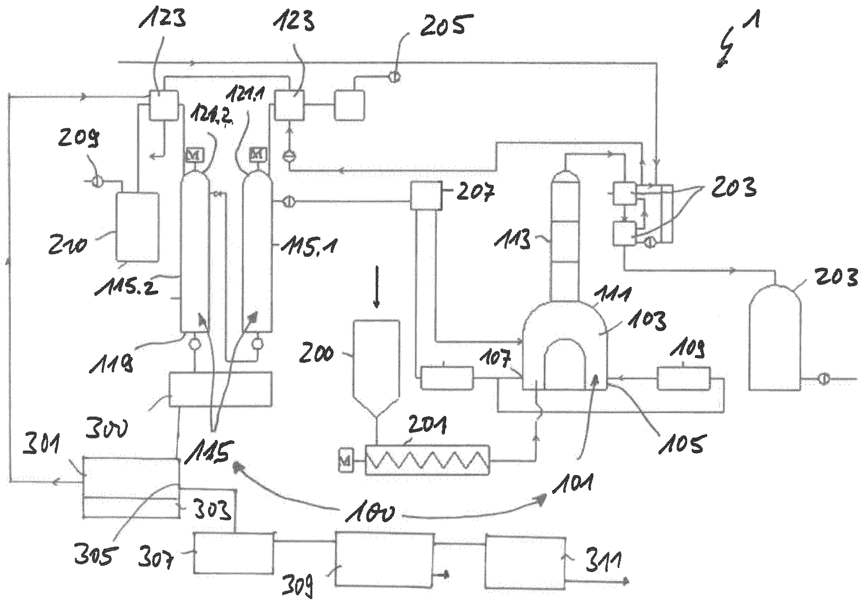

Eine Ausführungsform wird im Folgenden anhand der Zeichnung näher beschrieben. Die einzige Figur zeigt eine schematische Darstellung einer Anlage zur Erzeugung von Treibstoffen für Verbrennungsmotoren aus kohlenwasserstoffhaltigen Reststoffen, mit der erfindungsgemäßen Vorrichtung, in der das erfindungsgemäße Verfahren eingesetzt werden kann.

Eine Anlage 1 zur Herstellung von Treibstoffen für Verbrennungsmotoren aus kohlenwasserstoffhaltigen Reststoffen umfasst eine in die Anlage 1 eingebundene Vorrichtung 100 zum Separieren von Treibstoffen für Verbrennungsmotoren, wie Jet-Fuel oder Dieselöl, aus kohlenwasserstoffhaltigen Reststoffen in einer Anlage zur Erzeugung solcher Treibstoffe.

Die Vorrichtung 100 umfasst eine Mischeinrichtung 101, in dem ein Ringraum 103 ausgebildet ist. Der Ringraum 103 ist auf einer Eingangsseite 105 und auf einer Ausgangsseite 107 mit wenigstens einer Injektionsmischturbine 109 verbunden. Die wenigstens eine Injektionsmischturbine 109 saugt auf der Ausgangsseite 107 Material eines im Ringraum 103 befindlichen Produktgemisches aus kohlenwasserstoffhaltigen Reststoffen und Katalysatoröl an und drückt dieses dampfhaltige Produktgemisch auf der Eingangsseite 105 wieder tangential in den Ringraum 103, so dass im Ringraum 103 eine kreisförmige Strömung mit einer Ringgeschwindigkeit wie in einem Rührbehälter entsteht. Als Katalysator wird dabei ein aus der Natur bzw. Osmose bekanntes Kation-Aluminium-Silikat mit den Kationen Kalium, Calcium und Eisen verwendet, welches auch als Mineral in der Kohle enthalten ist. Zusätzlich zu dem Katalysator in Form von Kohlezusatz wird dem Produktgemisch noch Kalkstein zur Bindung von Säuren hinzugegeben, so dass der pH-Wert über 8 liegt. Eine Steuereinrichtung (nicht dargestellt) steuert in dem Ringraum 103 eine Reaktionstemperatur T3, die vorzugsweise bei etwa 200 °C liegt, aber auch in einem Temperaturbereich von etwa 180°C bis 220 °C liegen kann. Unter diesem Temperaturverhältnis erfolgt bei der kreisförmigen Strömung im Ringraum 103 eine katalytische Reaktion des Produktgemisches. Anteile des Produktgemisches, die bereits im Ringraum 103 verdampfen, steigen auf und werden an einer Oberseite 111 der Mischeinrichtung 100 in einem Verdampfer 113 gereinigt und abgeführt.

Die Vorrichtung 100 umfasst auch eine Verdampfungseinrichtung 115, die mit der Ausgangseite 107 der Mischeinrichtung 100 verbunden ist. Ein dampfhaltiges Produktgemisch wird von der Mischeinrichtung 101 an die Verdampfungseinrichtung 115 abgeführt. Die Verdampfungseinrichtung 115 umfasst wiederum eine erste Verdampfungseinheit 115.1 und eine zweite Verdampfungseinheit 115.2. Die erste Verdampfungseinheit 115.1 ist stromaufwärts der zweiten Verdampfungseinheit 115.2 angeordnet und räumlich von dieser getrennt. Zwischen der ersten und zweiten Verdampfungseinheit 115.1 und 115.2 ist eine Pumpeinrichtung 117 angeordnet.

Die Steuereinrichtung (nicht dargestellt) steuert in der ersten Verdampfungseinheit 115.1 ein erstes Vakuum V1 von über 90%, vorzugsweise von größer/gleich 95% und in der zweiten Verdampfungseinheit 115.2 ein zweites Vakuum V2, das dem ersten Vakuum V2 entspricht. Die Steuereinrichtung steuert in der ersten Verdampfungseinheit 115.1 zudem eine erste Verdampfungstemperatur T1 und in der zweiten Verdampfungseinheit 115.2 eine zweite Verdampfungstemperatur T2, die höher als die erste Verdampfungstemperatur T1 ist. Die erste Verdampfungstemperatur T1 beträgt in der vorliegenden Ausführungsform etwa 180 °C, kann aber in anderen Ausführungsformen auch zwischen 160 °C und 220 °C liegen. Die zweite Verdampfungstemperatur T2 ist größer/gleich 200 °C, vorzugsweise größer/gleich 220 °C.

Mit der Einstellung von Vakuum und Temperatur des Heizmediums an einer Wand der Verdampfungseinrichtung 115 kann nun prozentgenau die Qualität des Produktes eingestellt werden und durch Rückführung eines Teiles des Öles und des Kohlenwasserstoff-Kondensates aus atmosphärischen Teil wird die Zähigkeit des katalytischen Reaktionsgemisches in den Injektions-Mischungs-Turbinen konstant gehalten und damit der kontinuierliche Dauerbetrieb gewährleistet

Mit der vorliegenden Zweistufigkeit der Verdampfung wird erreicht, das zunächst in der ersten Stufe die leichter flüchtigen Bestandteile aus dem Produktgemisch abgeführt werden und dann in der zweiten Stufe etwas nachgeheizt wird, um auch noch die etwas schwerer flüchtigen Bestandteile aus dem dann auch noch Öl enthaltenen Produktgemisch und an einem unteren Ende 119 der zweiten Verdampfungseinheit 115.2 im Wesentlichen nur noch hochqualitatives Bitumen zu erhalten. Die flüchtigen Bestandteile des Produktgemisches werden an einem jeweiligen oberen Ende 121 der ersten und zweiten Verdampfungseinheit 115.1, 115.2 über Kondensatoren 123 zum Produktausgang für Dieselöl bzw. Jet-Fuel geführt.

Die Anlage 1 weist eine Steuereinrichtung auf, die an sich bekannt ist und hier nicht näher beschreiben wird. Anlagensteuerungen werden für den Betrieb vieler Anlagen verwendet und können auch in der erfindungsgemäßen Anlage zum Einsatz kommen.

Die Anlage 1 weist einen Eintragsbereich 200 auf, über den kohlenwasserstoffhaltige Reststoffe in die Anlage 1 eingegeben werden können. Unter kohlenwasserstoffhaltigen Reststoffen werden Erdöle, technische Öle, Kohle, Biomasse und aufbereitete Abfallstoffe, die auch Ersatzbrennstoffe auf Müllbasis genannt werden, verstanden.

Die vorgenannten Eingangsstoffe werden über ein Zerkleinerungs- und Fördersystem 201 in den Ringraum 103 der Mischeinrichtung 100 geleitet und wenige Zentimeter oberhalb eines Bodens der Mischeinrichtung 100 über einen geöffneten Schieber eingegeben. In dem Ringraum 103 befindet sich Katalysatoröl, Der Ringraum 103 verengt sich in Richtung des Bodens.

Das Produktgemisch aus kohlenwasserstoffhaltigen Reststoffen und Katalysatoröl wird dann durch die wenigstens eine Injektionsmischturbine 109 in eine Bewegung mit einer Ringgeschwindigkeit gebracht, so dass unter den niedrigen Reaktionstemperaturen und unter Beigabe des Katalysators und des Kalks eine katalytische Reaktion erzeugt wird, die bereits zu einer Verdampfung leicht flüchtiger Bestandteile des Produktgemisches führt. Diese werden an der Oberseite 111 der Mischeinrichtung 100 gereinigt und über Kondensatoren 203 einem Jet-Fuel Ausgang 205 zugeführt oder (schwerere Bestandteile) rückgekühlt und der Mischeinrichtung 100 an der Eingangsseite 105 wieder zugeführt.

Teile des dampfhaltigen Produktgemisches im Ringraum 103 werden an der Ausgangsseite 107 einem Abscheider 207 zugeführt, von dem ein abgeschiedener Teil wieder in den Ringraum 103 zurückgeführt wird und der verbleibende Teil in die Verdampfungseinrichtung 115 geleitet wird, wobei zunächst die erste Verdampfungseinheit 115.1 und dann die zweite Verdampfungseinheit 115.2 durchlaufen wird. Am unteren Ende 119 der zweiten Verdampfungseinheit 115.2 befindet sich dann die Entnahmestelle für Bitumen. An en beiden oberen Enden 121.1 und 121.2 der ersten bzw. zweiten Verdampfungseinheit 115.1, 115.2 wird dann das Produkt abgeführt, und über die Kondensatoren 123 dem Jet-Fuel Ausgang 205 oder einem Dieselöl-Ausgang 209 zugeführt. Kondensate der Kondensatoren 123 werden wieder der Mischeinrichtung 101 zugeführt.

Die Verdampfungseinrichtung 115 mit der ersten Verdampfungseinheit 115.1 und der zweiten Verdampfungseinheit 115.2 hat einen Ausgang zum Austragen der nicht verdampfbaren Rückstände, d.h. des zähen Bitumens zusammen mit Katalysatorresten. Angeschlossen an den Ausgang ist ein Zwischenbehälter 300, in dem das Bitumen gesammelt wird. An den Zwischenbehälter 300 ist wiederum über eine Zuführung eine Mahleinrichtung 301, insbesondere eine Hammermühle, angeschlossen. Bei Vorliegen einer vorbestimmbaren Menge nicht verdampfbarer Rückstände in dem Zwischenbehälter 300 wird diese Menge als Charge in die Mahleinrichtung 301 überführt.

Die Einleitung der nicht verdampfbaren Rückstände aus Bitumen und Katalysator aus der Verdampfungseinrichtung 115 bzw. den Verdampfungseinheiten 115.1, 115.2 erfolgt über den Zwischenbehälter 300, der zum einen kontinuierlich im Dauerbetrieb aus der Anlage 1 gespeist wird und zum anderen alle 2 - 3 Tage den Gesamtinhalt der Anlage 1 aufnimmt, da die Anlage 1 dann mit dem produzierten Öl, dem Katalysator und dem Kalkstein wieder in den Urzustand gebracht wird und dadurch verhindert wird, dass sich Verklumpungen oder Verstopfungen in der Anlage 1 bilden können.

In der Anlage 1 und mit dem Verfahren der vorliegenden Erfindung werden neben etwa 5.000 1/h Jet-Fuel oder Diesel auch 2.500 1/h nicht verdampfbare Rückstände (Bitumen, Katalysator, Kalk) aus dem Prozess der Anlage 1 in die Mahleinrichtung 301 und insbesondere in die Hammermühle geleitet. Aus diesem Gemisch werden 2.000 1/h Öldampf aus der Hammermühle in den Kondensator abgegeben. Das sind 130 Liter Öldampf je Stunde, wenn mit einer mittleren Zusammensetzung des Öldampfes von C₃₀H₆₀ ausgegangen wird. Damit Öldampf in der Mahleinrichtung 301 mit der vorstehenden Ausbeute entstehen kann, weist die Mahleinrichtung 301 eine Druckkammer 303 auf, in die CO2 aus der Anlage 1 eingeleitet wird.

Durch die Einleitung von CO₂ aus der Zersetzung des Öles und der Kohle, bei der 2.550 l/h entsteht, in den unteren Bereich der Hammermühle in der Kammer unter der Mahlkammer entstehen in der Mahlkammer Partialdrücke von 5 %, also Verdampfungstemperaturen, die einem Vakuum des Öles von 95 % entsprechen. Das ist die Verdampfungstemperatur von 180 - 200°C.

Die dampfförmigen Produkte aus der Mahleinrichtung 301 gelangen über eine Destillationsstufe in die Kondensatoren 123 und von dort in einen Produkttank 210. Das dort gesammelte Kondensat enthält Kohlenwasserstoffe von (CH₂)ₙ mit n = 20 - 40. Das Kondensat wird in der Anlage 1 dazu genutzt, einerseits die Flüssigkeit in der ersten katalytischen Stufe mit der Injektionsvermischungsturbine 109 aufzufüllen und andererseits die Reaktionsflüssigkeit in der ersten Stufe alle 2-3 Tage zu erneuern, an denen dann die gesamte Reaktionsflüssigkeit unter Zugabe von Katalysatorschlamm und Kalksteinpulver für die Neutralisation des Gemisches und Anhebung des pH-Wertes über 8 in den Zwischenbehälter 300 gepumpt wird, um von dort dann in die Mahleinrichtung 301 weitergeleitet zu werden.

Von dem Zwischenbehälter 300 aus wird die Mahleinrichtung 301 bzw. die Hammermühle zunächst zu 40 Vol.% mit den nicht verdampfbaren Rückständen aus Bitumen, Katalysator und Kalk gefüllt. Während des Betriebs und nach Bildung eines porösen/permeablen Inhaltes wird die Mahleinrichtung 301 bis 50 Vol.% angefüllt. Durch den Druck in der Druckkammer 303 wird dann Öldampf erzeugt und in die Anlage 1 zurückgeführt. Mit der Abgabe des Öldampfes in die Anlage 1 werden immer neue Mengen nicht verdampfbarer Rückstände aus dem Zwischenbehälter 300 in die Mahleinrichtung 301 abgegeben. Die Abgabemenge unterliegt einer Füllstandregelung. Wenn die Abgabemenge auf weniger als die Hälfte der ursprünglichen Abgabemenge zurückgegangen ist, weil die Feststoffmasse den Hauptteil des Inhaltes einnimmt, wird die Zufuhr von neuem Material aus dem Zwischenbehälter 300 gestoppt, der Inhalt der Mahleinrichtung 301 den darauffolgenden 15 Minuten durch den Mahlvorgang und die dabei entstehende Wärme getrocknet und dann in durch Öffnen einer Austragsklappe 305 in einen Staubbehälter 307 abgegeben. Von dort gelangt die Staubmenge über eine Förderschnecke in einen Separationsbehälter 309 für die Trennung von Katalysator und Düngemittel. Am Ausgang des Separationsbehälters 309 schließt sich eine Trocknungseinrichtung 311 an, in der das feuchte Düngemittel bedarfsweise getrocknet werden kann. Das Düngemittel kann also flüssig aus dem Separationsbehälter 309 oder trocken aus der Trocknungseinrichtung 311 entnommen werden.

In einem Ausführungsbeispiel soll die erfindungsgemäße Anlage 1 und das erfindungsgemäße Verfahren näher erläutert werden. Zur Erzeugung von 5.000 1/h Jet-Fuel oder Diesel wird ein Gemisch aus 15 Tonnen Napiergras aus Thailand, 1 Tonne Kohle und 300 kg Kalkstein über eine Förderschnecke in den Ringbehälter 103 mit einem Durchmesser von 6 m außen, 3 m innen und 12 Injektionsmischungsturbinen 109 eingegeben. Die Injektion besteht aus Druckluftinjektion in einer jeweiligen Ansaugleitung der Injektionsmischungsturbine 109. Elektromotoren (nicht dargestellt) der Injektionsmischungsturbinen haben einen Strombedarf von 2 MW. Sie werden von 3 Dieselgeneratoren von je 1 MW gespeist.

### Bezugszeichenliste

- 1: Anlage
- 117: Pumpeinrichtung
- 100: Vorrichtung zum Separieren
- 119: Unteres Ende
- 101: Mischeinrichtung
- 121.1: Erstes oberes Ende
- 103: Ringraum
- 121.2: Zweites oberes Ende
- 105: Eingangsseite
- 123: Kondensatoren
- 107: Ausgangsseite
- 200: Eintragsbereich
- 109: Injektionsmischturbine
- 201: Fördersystem
- 111: Oberseite
- 203: Kondensatoren
- 113: Verdampfer
- 205: Jet-Fuel-Ausgang
- 115: Verdampfungseinrichtung
- 207: Abscheider
- 115.1: Erste Verdampfungseinheit
- 209: Dieselöl-Ausgang
- 115.2: Zweite Verdampfungseinheit
- 300: Zwischenbehälter
- 301: Mahleinrichtung
- 303: Druckkammer
- 305: Austragsklappe
- 307: Staubbehälter
- 309: Separationsbehälter
- 311: Trocknungseinrichtung

## Patentansprüche

1. Anlage (1) zur Herstellung von Düngemittel aus kohlenwasserstoffhaltigen Reststoffen, mit einer Mischeinrichtung (101) zur Aufnahme und zum Mischen der kohlenwasserstoffhaltigen Reststoffe und eines Kreislaufkatalysatoröls, die stromabwärts mit einer Verdampfungseinrichtung (115; 115.1; 115.2) verbunden ist, um ein aus der Mischeinrichtung (101) abgeführtes Produktgemisch zu verdampfen und Jet-Fuel oder Dieselöl zu separieren,
**dadurch gekennzeichnet,**
**dass** an einen Ausgang am unteren Ende (119) der Verdampfungseinrichtung (115; 115.1; 115.2) eine Mahleinrichtung (301) angeschlossen ist, in der ein am unteren Ende (119) anfallender nicht verdampfbarer Rückstand aus den kohlenwasserstoffhaltigen Reststoffen und dem Kreislaufkatalysatoröl gemahlen wird, und an die Verdampfungseinrichtung (115; 115.1; 115.2) ein Separationsbehälter (309) angeschlossen ist, in dem das gemahlene Produkt in Katalysator und Düngemittel getrennt wird.

2. Anlage nach Anspruch 1,
**dadurch gekennzeichnet,**
**dass** zwischen der Verdampfungseinrichtung (115) und der Mahleinrichtung (301) Zwischenbehälter (300) angeordnet ist, in dem der nicht verdampfbare Rückstand kontinuierlich gesammelt wird.

3. Anlage nach Anspruch 1 oder 2,
**dadurch gekennzeichnet,**
**dass** die Mahleinrichtung (301) eine Druckkammer (303) aufweist.

4. Anlage nach einem der vorstehenden Ansprüche,
**dadurch gekennzeichnet,**
**dass** der Separationsbehälter (309) Wasser enthält, in dem der Katalysator ausfällt.

5. Anlage nach Anspruch 4,
**dadurch gekennzeichnet,**
**dass** der Separationsbehälter (309) mit einem Katalysator-Ausgang an einen Katalysator-Eingang der Mischeinrichtung (301) angeschlossen ist, um den Katalysator aus dem Separationsbehälter (309) in die Mischeinrichtung (301) zu überfuhren.

6. Anlage nach Anspruch 4 oder 5,
**dadurch gekennzeichnet,**
**dass** der Separationsbehälter (307) mit einem Ausgang an eine Trocknungseinrichtung (311) angeschlossen ist, um das Düngemittel zu trocknen.

7. Anlage nach einem der Ansprüche 1 bis 6,
**dadurch gekennzeichnet,**
**dass** die Mahleinrichtung (301) eine Hammermühle ist.

8. Verfahren zur Herstellung von Düngemittel in einer Anlage mit Merkmalen wenigstens eines der Ansprüche 1 bis 7,
- Bereitstellen von kohlenwasserstoffhaltigen Reststoffen,
- Bereitstellen eines Katalysatoröls,
- Bereitstellen einer Mischeinrichtung;
- Bereitstellen einer Verdampfungseinrichtung;
**dadurch gekennzeichnet,**
**dass** ein in der Verdampfungseinrichtung verbleibender Rückstand gemahlen wird und das gemahlene Produkt in Katalysator und Düngemittel getrennt wird.

9. Verfahren nach Anspruch 8,
**dadurch gekennzeichnet,**
**dass** der Katalysator der Verdampfungseinrichtung zugeführt wird.

10. Verfahren nach Anspruch 8 oder 9,
**dadurch gekennzeichnet,**
**dass** das Düngemittel einer Trocknungseinrichtung zugeführt wird.
